# NEW EUROPEAN PATENT SPECIFICATION

(11) **EP 3 781 344 B2**
(45) Date of publication and mention of the opposition decision: **26.08.2026**
(45) Mention of the grant of the patent: 15.11.2023
(21) Application number: 19784449.1
(22) Date of filing: 26.03.2019
(51) Int. Cl.: B23K 9/00, B33Y 40/20, B23K 37/00, B23K 9/16, B23K 9/04, B22F 12/20, B22F 12/17, B22F 10/50, B22F 10/322, B22F 10/22, B33Y 50/00, B33Y 30/00, B33Y 10/00, B23K 37/003

(54) **METHOD AND APPARATUS FOR MANUFACTURING 3D METAL PARTS**
VERFAHREN UND VORRICHTUNG ZUR HERSTELLUNG VON 3D-METALLTEILEN
PROCÉDÉ ET APPAREIL POUR LA FABRICATION DE PIÈCES MÉTALLIQUES EN 3D

(30) Priority: 14.04.2018 AU 2018901257
(43) Date of publication of application: 24.02.2021
(73) Proprietor: AML3D Limited, Salisbury South SA 5106 (AU)
(72) Inventor: SALES, Andrew Michael Clayton, Salisbury South, South Australia 5106 (AU)
(74) Representative: Kutzenberger Wolff & Partner
(86) International application number: PCT/AU2019/050269
(87) International publication number: WO 2019/195877

(56) References cited:
- WO-A1-2017/103849
- WO-A1-2019/195877
- AU-A0- 2018 901 257
- CN-A- 106 141 373
- US-A- 5 233 150
- US-A- 5 233 150
- US-A1- 2007 122 562
- US-A1- 2009 039 062
- US-A1- 2015 108 095
- US-A1- 2016 096 326
- US-A1- 2016 271 732
- US-A1- 2018 345 649
- US-B1- 6 274 839
- US-B1- 8 604 381
- US-B2- 9 346 116
- XU XIANGFANG ET AL: "Oxide accumulation effects on wire+arc layer-by-layer additive manufacture process", JOURNAL OF MATERIALS PROCESSING TECHNOLOGY, vol. 252, 20 October 2017 (2017-10-20), pages 739 - 750, XP085260279, ISSN: 0924-0136, DOI: 10.1016/J.JMATPROTEC.2017.10.030
- J. DING ET AL: "Development of a laminar flow local shielding device for wire + arc additive manufacture", JOURNAL OF MATERIALS PROCESSING TECHNOLOGY, vol. 226, 1 December 2015 (2015-12-01), NL, pages 99 - 105, XP055674206, ISSN: 0924-0136, DOI: 10.1016/j.jmatprotec.2015.07.005
- XIONG JUN ET AL: "Finite element analysis and experimental validation of thermal behavior for thin-walled parts in GMAW-based additive manufacturing with various substrate preheating temperatures", APPLIED THERMAL ENGINEERING, PERGAMON, OXFORD, GB, vol. 126, 22 July 2017 (2017-07-22), pages 43 - 52, XP085198133, ISSN: 1359-4311, DOI: 10.1016/J.APPLTHERMALENG.2017.07.168
- AKBARI MEYSAM, DING YAOYU, KOVACEVIC RADOVAN,: "Process development for a robotized laser wire additive manufacturing", PROCEEDINGS OF THE ASME 2017 12TH INTERNATIONAL MANUFACTURING SCIENCE AND ENGINEERING CONFERENCE(MSEC2017), LOS ANGELES, CA, USA, 1 January 2017 (2017-01-01), Los Angeles, CA, USA, pages 1 - 11, XP093208895
- I GIBSON , D. W. ROSEN , B. STUCKER: "Additive Manufacturing Technologies, Rapid Prototyping to Direct Digital Manufacturing", 1 January 2010, SPRINGER , ISBN: 978-1-4419-1119-3, article GIBSON, IAN; ROSEN, DAVID ; STUCKER, BRENT: "Table of contents", pages: 1 - 10, XP009559610
- WU BINTAO; PAN ZENGXI; DING DONGHONG; CUIURI DOMINIC; LI HUIJUN; FEI ZHENYU: "The effects of forced interpass cooling on the material properties of wire arc additively manufactured Ti6Al4V alloy", JOURNAL OF MATERIALS PROCESSING TECHNOLOGY, vol. 258, 27 March 2018 (2018-03-27), NL , pages 97 - 105, XP085384452, ISSN: 0924-0136, DOI: 10.1016/j.jmatprotec.2018.03.024
- BAI XINGWANG; ZHANG HAIOU; WANG GUILAN: "Modeling of the moving induction heating used as secondary heat source in weld-based additive manufacturing", THE INTERNATIONAL JOURNAL OF ADVANCED MANUFACTURING TECHNOLOGY, vol. 77, no. 1, 22 October 2014 (2014-10-22), London , pages 717 - 727, XP035458006, ISSN: 0268-3768, DOI: 10.1007/s00170-014-6475-2
- LU X.; ZHOU Y. F.; XING X. L.; SHAO L. Y.; YANG Q. X.; GAO S. Y.: "Open-source wire and arc additive manufacturing system: formability, microstructures, and mechanical properties", THE INTERNATIONAL JOURNAL OF ADVANCED MANUFACTURING TECHNOLOGY, vol. 93, no. 5, 27 June 2017 (2017-06-27), London , pages 2145 - 2154, XP036339816, ISSN: 0268-3768, DOI: 10.1007/s00170-017-0636-z
- DING DONGHONG; PAN ZENGXI; CUIURI DOMINIC; LI HUIJUN: "Wire-feed additive manufacturing of metal components: technologies, developments and future interests", THE INTERNATIONAL JOURNAL OF ADVANCED MANUFACTURING TECHNOLOGY, vol. 81, no. 1, 9 May 2015 (2015-05-09), London , pages 465 - 481, XP035536658, ISSN: 0268-3768, DOI: 10.1007/s00170-015-7077-3
- CUNNINGHAM C.R., FLYNN J.M., SHOKRANI A., DHOKIA V., NEWMAN S.T.: "Invited review article: Strategies and processes for high quality wire arc additive manufacturing", ADDITIVE MANUFACTURING, vol. 22, 1 August 2018 (2018-08-01), NL , pages 672 - 686, XP093208882, ISSN: 2214-8604, DOI: 10.1016/j.addma.2018.06.020
- AML3D: "AML Layer 5 - View A", YOUTUBE, 17 September 2018 (2018-09-17), pages 1 - 2, XP093208888, Retrieved from the Internet <URL:https://www.youtube.com/watch?v=h4sq43PVNP0> [retrieved on 20240926]
- AML3D: "AML Layer 5 - View B", YOUTUBE, 17 September 2018 (2018-09-17), pages 1 - 2, XP093208890, Retrieved from the Internet <URL:https://www.youtube.com/watch?v=TzglES4nyO8> [retrieved on 20240926]
- UGLA, ADNAN A. , OGUZHAN YILMAZ, AND AHMED RJ ALMUSAWI: "Development and control of shaped metal deposition process using tungsten inert gas arc heat source in additive layered manufacturing", PROCEEDINGS OF THE INSTITUTION OF MECHANICAL ENGINEERS, PART B: JOURNAL OF ENGINEERING MANUFACTURE, vol. 232, no. 9, July 2018 (2018-07-01), pages 1628 - 1641, XP055644646
- HASCOET, J. Y. ET AL.: "Additive manufacturing viewed from material science : state of the art & fundamentals", MATERIALS SCIENCE FORUM . VOL. 783 . TRANS TECH PUBLICATIONS, vol. 783, 23 April 2014 (2014-04-23), XP055644649

## Description

### Technical Field of the Invention

This invention relates to a method and apparatus for manufacturing weldable metallic objects by solid freeform fabrication.

### Background of the Invention

Metallic parts, including machine and structural components, that are made from any material type for an engineered use are usually made by casting, forging, rolling and machining from an ingot or billet. These methods are normally disadvantaged by a high percentage of material wastage when finishing the part to its final shape. Additionally, these methods enhance delivery times for the delivery of the completed parts.

Metallic parts that are completely dense in their physical form can also be manufactured using technologies identified as additive manufacturing, rapid prototyping, rapid manufacturing, layered manufacturing or additive fabrication. This method of manufacture encompasses the use of computer aided design software (CAD) to initially develop a computer-generated model of the part to be manufactured, then to convert the computer-generated model into thin parallel layers which are normally in a horizontal plane. The metallic part is then manufactured by layering successive material in the form of a consumable powder fusing each layer together sequentially until a final shape is formed that resembles the CAD model. This method is also commonly referred to as 3D printing, solid freeform fabrication, rapid prototyping or wire-arc additive manufacturing.

The method described in the preceding paragraph allows manufacturing of metallic parts of nearly any shape with the advantages of increased production times, depending on the size of each metallic part. The method is normally restricted for prototypes, low volume production and small production runs, but is less suited to large parts and high volume manufacture. Further methods and apparatuses for manufacturing weldable metallic objects by solid freeform fabrication are disclosed in US 2015/108095 A1 and J.Ding et al: "Development of a laminar flow local shielding device for wire + arc additive manufacture", Journal of Materials Processing Technology, vol. 226, 1 December 2015 (2015-12-01), pages 99-105.

Before turning to a summary of the solution provided by the present invention, it should be appreciated that reference to any prior art in this specification is not, and should not be taken as, an acknowledgment or any form of suggestion that this prior art forms part of the common general knowledge in any country.

### Summary of the Invention

In one aspect, the present invention provides a method of manufacturing a metallic part in a weldable material by solid freeform fabrication unrestricted in size and open to the ambient atmosphere according to claim 1. The method, inter alia, comprises:
generating a computer-generated, three dimensional model of the part, slicing the computer-generated, three dimensional model into a set of computer-generated, parallel sliced layers and then dividing each layer into a set of computer-generated, virtual, one-dimensional pieces and, with reference to layered weld-bead geometry data, forming a computer-generated, direction specific, layered model of the part,
uploading the direction specific, layered model of the part into a welding control system able to control the position and activation relative to a support substrate, of an electric arc delivered by a high energy tungsten arc welding torch, a plasma transferred arc welding torch, and/or a gas metal arc welding torch, and a system for feeding a consumable wire placed in an open area build space relevant to the substrate unrestricted in size and open to the ambient atmosphere,
directing the welding control system to deposit a sequence of one-dimensional weld beads of the weldable material onto the supporting substrate in a pattern required to form a first layer of the computer-generated direction specific layered model of the part,
depositing a second welded layer by sequencing one-dimensional weld beads of the weldable material onto the previous deposited layer in a configuration the same as the second layer of the computer-generated direction specific layered model of the part, and
repeating each successive weld bead layer of the computer-generated, direction specific,
layered model of the part until the entire part is completed;
wherein the method further includes:
   displacing the atmosphere within the immediate vicinity of the heat source with an inert gas atmosphere which produces a required flow rate, and in which the inert atmosphere contains a maximum oxygen concentration, wherein the inert gas is delivered by an apparatus through a matrix of individual gas diffusers and/or a filter; and
   engaging an induction heating and closed loop cooling apparatus synergic to a welding control system and pre-heating the substrate material including the deposited weld beads, relevant to the type of weldable material, wherein induction heating and cooling cycles are applied constantly or pulsed from the first layer to the final layer, where optimal heating and/or cooling cycles of the weldable material are relative to the final desired part shape and microstructure.

In another aspect, the present invention provides a production apparatus for a part made of a weldable material by solid freeform fabrication, where there is no enclosure or reactor required, and the part is built in an unrestricted build environment open to the ambient atmosphere by an apparatus which distributes an inert gas flow according to claim 9. The production apparatus, inter alia, includes:
a robotic multiple-axis mechanism controlling the position and movement of a welding torch with a wire feeder relative to a stationary support substrate placed upon a fixed support, the welding torch being an electric arc welding process, a tungsten arc welding torch, a gas metal arc welding torch, or a plasma transferred arc welding torch;
a support mechanism controlling the position and movement of the welding torch with the wire feeder relative to the support substrate, with an actuator controlling the position and movement relative to the support mechanism; and
a control system able to read a computer-generated, three dimensional, direction specific, layered model of the part and employ the computer-generated model to control the position and movement of the robot, and the operation of the welding torch and wire feeder, such that the part is built by welding in a layer-by-layer sequence according to the one-dimensional slices of the weldable material onto the substrate in agreement with the computer-generated,
three dimensional, direction specific, layered model of the part;
the apparatus also including a localised purging apparatus and an induction heating and closed loop cooling apparatus.

In a preferred form, the required flow rate mentioned above is greater than 20 l/min. In another preferred form, the maximum oxygen concentration mentioned above is less than 500ppm oxygen or alternatively is less than 100ppm oxygen. In yet another preferred form, there are less than 25 of the individual gas diffusers mentioned above.

The invention thus provides a method and apparatus for increased deposition of manufactured metallic parts in weldable ferrous and non-ferrous metals, including their alloys, which are not restricted to the build size of a part.

The invention may include localised gas flow distribution in relation to the weld zone and melted metal to minimise surface contamination as an alternative to current practices involving atmospheric oxygen surrounding the weld zone and melted metal.

The invention may also include controlled heating and cooling through constant or intermittent temperature control using induction heating and a closed loop cooling system, which can be maintained during the build process and provide controlled heating and cooling of the part, additionally reducing distortion and therefore providing some control to distortion of the built part.

As is apparent from the above, the invention is a method and apparatus for 3D metal printing manufacturing of a part, created from a computer-generated model which includes sliced layers with a finite dimension, in a weldable material by solid freeform fabrication, unrestricted in part size, which utilises (a) a protective inert gas shield that surrounds the electric arc and subsequent cooling molten metal and (b) an induction heating and closed loop cooling apparatus for temperature control of both the substrate and layered 3D printed part during the sequentially layered weld bead operation.

The use of the protective inert gas shield, which can also be described as a localised inert gas diffuser apparatus, and the induction heating and cooling apparatus, makes it possible to increase volumetric deposition layer by layer for weldable metals, in particular, such as carbon manganese alloys, aluminium alloys, nickel alloys and titanium or titanium alloys and titanium alloy objects.

The entire build envelope of the 3D printed part may use a similar substrate metal to deposit the initial and subsequent weld bead layers that form the final part, without the need for commissioning an entirely enclosed chamber or using contained sealed protective procedures to avoid oxidising the newly deposited sequential layers of molten weld metal or the associated molten area.

The computer-generated model of the part may be separated into a set of parallel layered slices with a finite dimension, and each layered slice may be divided into a set of sequential virtual one-dimensional pieces. The term "virtual one-dimensional pieces" as used herein means longitudinal bead resembling pieces of the weld bead material geometry which, when deposited side by side or stacked one upon another in a specific sequential pattern according to the direction specific to the model, will form the part that is to be manufactured. The term "computer-generated direction specific, layered model of the part" as used herein means a three dimensional computerized illustration of the piece which is to be shaped.

The computer-generated model may comprise dimensional and weld bead geometry data in all directions and be given a three dimensional design which resembles the three dimensional design of the metallic part that is to be manufactured. The computer-generated, direction specific, layered model may then be applied to the freeform fabrication equipment as a template to construct the physical metallic part. That is, the computer-generated model may be transformed into a specific set of instructions implemented by the control system of the solid freeform fabrication equipment such that the metallic part is being manufactured sequentially by welding a wire onto a substrate in sequential lines, where each welded layer corresponds to a slice of the computer-generated, direction specific, layered model. The invention may apply any known or credible software for computer assisted design for creating the computer-generated, direction specific, layered model.

During the welding of aluminium alloys, stainless steels, nickel or nickel alloys, titanium or titanium alloy or other reactive metal parts, inert gas protection is required to prevent sensitisation or destruction of the protective oxide layer such that this protective layer is oxidised and therefore may affect the final physical and mechanical properties of the final formed part. Therefore, the oxygen surrounding the electric arc and subsequent molten material may be completely displaced by applying a flow of argon or argon mixture gas in a stable continuous mode at predetermined flow-rate settings that give a laminar or any other suitable flow through a series of numerous gas diffuser outlets and/or through a filter such as a sintered bronze filter, in the bottom of a gas manifold compartment, or by any other supply options to the compartment, by typically inserting only the same amount of inert gas as the volume of the compartment and still obtain an oxygen content in the inert argon atmosphere, typically of less than 500ppm oxygen or less than 100ppm oxygen. The gas manifold compartment is 80 to 180 mm wide and 180 to 400 mm long, or has a cylindrical shape of less than 400mm in diameter.

Gas flow into the gas manifold compartment may be via a manifold located within the purge apparatus and gas flows through the manifold, distributed accordingly through the gas diffuser nozzles and/or the filter which displaces the oxygen in the weld zone. The inlet tube may distribute and control the flow of gas into the manifold via an electronically controlled valve, which has an ability to control the flow rate, pressure and volume of gas continuously or periodically, creating a pulsed delivery of inert gas to the weld zone. This feature of the purge apparatus gives the advantage of using less volumes of costly inert gas.

The gas manifold compartment may also include a closed cooling circuit where a separate inert gas is passed through a heat-exchanger to lower the temperature of the inert gas flowing through the manifold, and then this gas may be circulated via a recycle distribution loop that flows through the manifold tubes providing the localised shielding to the weld zone. This feature is advantageous to avoid overheating of the localised purge apparatus and to a limited extent also the welding torch.

A 6-axis or greater robot may be used to control the position and movement of a welding torch with wire feeder for feeding a wire consumable of the weldable material, ideally positioned above the build envelope of the part to be manufactured. The robot may also be governed by the size of the substrate. The localised purge apparatus may be mounted to a bracket arm structure that mounts the welding torch and related wire feeder holding device, which is mechanically attached to the robot. The localised purge apparatus is equipped with at least closable gas diffuser outlets and at least five closable gas inlets connected to the tube manifold in order to displace oxygen from the weld zone and substitute this gas with a controlled surrounding inert gas. The purge apparatus may incorporate the weld torch device in an interchangeable manner.

The invention may apply any known or conceivable control system for the operating movement of the electric arc welding torch, localised gas purging apparatus, and wire stock feeder. The operating movement may advantageously be furnished with a six axis robotic control system (X, Y, Z, and three or more rotation axis points). The operating movement may also be in the form of any known or conceivable gantry mounted systems (X, Y, Z) and the mounting table may be stationary or move in the X, Y, Z directions relative to the mounted electric arc welding torch. The invention may apply any known or conceivable welding torch and wire stock feeder system able to perform weld layered manufacturing of metallic parts by the welding processes known as tungsten inert gas welding (GTAW), gas metal arc welding (GMAW) and plasma transferred arc welding (PTAW).

The induction element for pre-heating the substrate and weld layers may be synergic controlled with the welding and robotic control system. Synergic closed looped control (of the 3 controllers) allows increased temperatures of the substrate and the deposited weld bead layers such that the welding parameters may be altered linearly from pre-set data in a fashion that increases weld bead geometry, therein increasing metal deposition, and therein increasing welding speeds.

The induction heating apparatus may be any commercially available system, electromagnetic in nature, preferably connected to the substrate where induction is initiated prior to the weld bead layering process. Application of preheating not only increases the weld bead size and deposition speeds but it also reduces distortion and internal residual stresses of the final 3D printed part. This offers an advantage over other known 3D metal printing processes. The application of controlled synergic induction heating relative to the welding process parameters may be enhanced further by known data that optimises the incremental application during the weld bead layering process, so that favourable physical and mechanical properties can be achieved for the final 3D printed part.

The cooling apparatus may be any commercially available system which is closed loop in nature and is preferably connected to the substrate via inlet and outlet fittings which circulate coolant through cooling channels within the substrate. Flow rates can vary depending on the metallic material type. Application of cooling assists in some cases where the desired mechanical properties of the 3D printed part are enhanced by more rapid cooling. Rapid cooling offers the advantage of decreasing the time between layers, and thus decreasing overall build times.

The temperature of the physical part during the weld bead layering process may be increased up to the softening point, for any weldable material. For example, in case of 3D metal layering of titanium or its alloys, the temperature may be as high as 800°C during the layered fabrication of the part. However, this will have a corresponding change to the heat source parameters of the electric arc and its delivery of the melted wire, wherein the electric arc parameters enhance the weld bead deposition. Beneficially, this can provide significant reductions in production times for parts manufactured in accordance with the invention.

### Brief Description of the Drawings

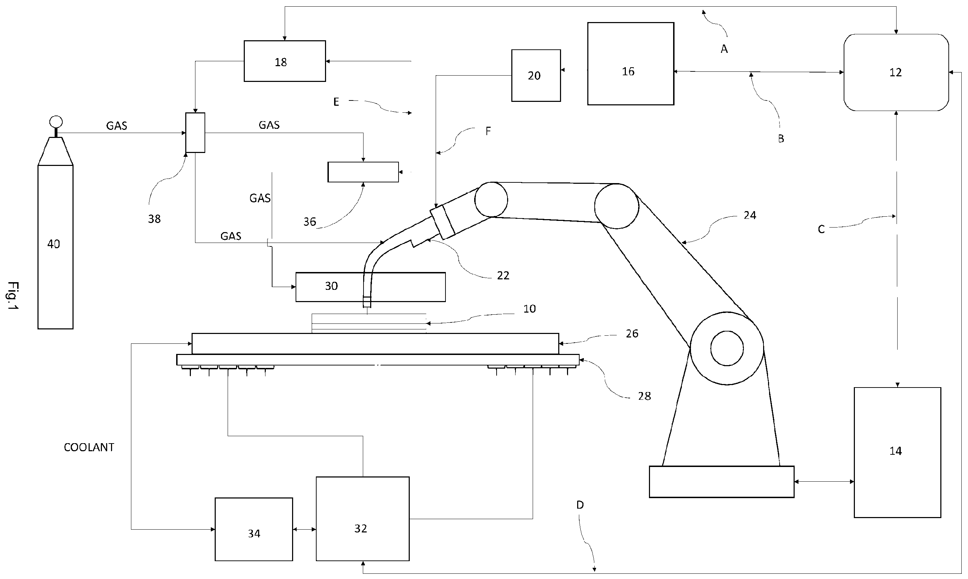

One embodiment of the manufacturing method and apparatus of the present invention is shown in the schematic drawing of Figure 1. Figure 1 shows the construction of a metallic part 10 by welding a piece of weldable material onto a first layer by an electric arc welding process that melts a wire consumable of the weldable material using a weld bead layering technique to provide freeform fabrication.

### Detailed Description of Preferred Embodiment

With reference to Figure 1, illustrated is a computer 12 providing feedback signals A,B,C,D,E for the control of a robot power supply 14, a welder power supply 16, an activating solenoid valve 36, an induction heating apparatus 32 and a solenoid controller 18. The welder power supply 16 also provides power and control for a wire feeder 20. Wire is fed via F to a welding torch 22 that is a part of the robot 24, which in this form is an electric arc transferred plasma welding torch. An electric arc may alternatively be transferred via a tungsten inert gas welding torch, again with a wire feeder 20 of similar weldable material. Further, an electric arc may be transferred via a wire consumable using a gas metal inert welding torch.

The gas supply system includes a shielding gas feed cylinder 40 supplying an 8/2 solenoid valve 36 to activate the gas going to a purge apparatus 30, via a further solenoid splitter valve 38. Feedback signals provide suitable control via the solenoid controller 18.

The metallic part 10 being welded in the layer-by-layer process described above is layered on a suitable substrate 26 supported by a substrate cooling bed 28. A purge apparatus 30 is positioned above the metallic part 10 to shield the deposited weld in the manner generally described above. Actuators for the robot 24 and the torch, and for the purge apparatus 30, are shown located outside the boundary limits of the build area, the substrate 26, and a high energy heat source 32.

The substrate 26 and subsequent metal layering is pre-heated and maintained using an induction heating apparatus 32, which is synergic controlled during the metal layering operation. Induction heating during the process enhances increased metal deposition and provides a means of distortion control for the final part 10.

The substrate 26 in this embodiment includes cooling channels (not shown) to further control the temperature of the metal part 10. The cooling apparatus 34 is closed loop in nature and is connected to the substrate via fittings which circulate coolant through the cooling channels. Cooling offers the advantage of decreasing the time between layers, thus decreasing overall build times for a completed 3D printed part.

This embodiment of the method and apparatus of the invention provides a high deposition method and apparatus for manufacturing 3D metal parts, which includes localised atmospheric protection and solid freeform fabrication unrestricted in size and open to the ambient atmosphere, in particular for the manufacture of parts made of carbon manganese alloys, aluminium alloys, nickel alloys, stainless steels and titanium alloys.

As mentioned above, the apparatus has no restriction to build or part size, or area size, and is open to the ambient atmosphere, wherein the molten weld pool and neighbouring area is shielded by the localised apparatus used for distributing a generous but controlled laminar inert gas flow. Gas flow distribution is located above the build area and given a design such that the gas distribution flows evenly and equally around the weld pool area and solidifying molten metal.

Many modifications may be made to the embodiment of the invention described in relation to Figure 1 without departing from the scope of the invention, as defined by the appended claims.

## Claims

1. A method of manufacturing a metallic part in a weldable material by solid freeform fabrication unrestricted in size and open to the ambient atmosphere, wherein the method comprises:
generating a computer-generated, three dimensional model of the part, slicing the computer-generated three dimensional model into a set of computer-generated, parallel, sliced layers and then dividing each layer into a set of computer-generated, virtual, one-dimensional pieces and, with reference to layered weld-bead geometry data, forming a computer-generated, direction specific, layered model of the part,
uploading the direction specific, layered model of the part into a welding control system able to control the position and activation relative to a support substrate, of an electric arc delivered by a high energy tungsten arc welding torch, a plasma transferred arc welding torch, and/or a gas metal arc welding torch, and a system for feeding a consumable wire placed in an open area build space relevant to the substrate unrestricted in size and open to the ambient atmosphere,
directing the welding control system to deposit a sequence of one-dimensional weld beads of the weldable material onto the supporting substrate in a pattern required to form a first layer of the computer-generated, direction specific, layered model of the part,
depositing a second welded layer by sequencing one- dimensional weld beads of the weldable material onto the previous deposited layer in a configuration the same as the second layer of the computer-generated direction specific layered model of the part, and
repeating each successive weld bead layer of the computer-generated, direction specific, layered model of the part until the entire part is completed;
wherein the method further includes:
displacing the atmosphere within the immediate vicinity of the heat source with an inert gas atmosphere which produces a required flow rate, and in which that inert atmosphere contains a maximum oxygen concentration, wherein the inert gas is delivered by a localised purge apparatus through a matrix of individual gas diffusers and/or a filter, in the bottom of a gas manifold compartment; and is **characterized in that** the gas manifold compartment is 80 to 180 mm wide and 180 to 400 mm long, or has a cylindrical shape of less than 400 mm in diameter, wherein the purge apparatus is equipped with at least closable gas diffuser outlets and at least five closable gas inlets connected to a tube manifold and the method includes
engaging an induction heating and closed loop cooling apparatus synergic to a welding control system and pre-heating the substrate material including the deposited weld beads, relevant to the type of weldable material, wherein induction heating and cooling cycles are applied constantly or pulsed from the first layer to the final layer, where optimal heating and/or cooling cycles of the weldable material are relative to the final desired part shape and microstructure.

2. A method according to claim 1, wherein the weldable material is a weldable metal, or a weldable alloyed metal, of ferrous or non-ferrous nature.

3. A method according to claim 2, wherein the weldable material is carbon steel or carbon manganese alloys, nickel or nickel alloys, stainless steels, aluminium or aluminium alloys, titanium or alloyed titanium, ferrous or non-ferrous, or a mixture of dissimilar weldable materials.

4. A method according to any one of claims 1 to 3, wherein the inert gas is one of argon, helium, hydrogen, nitrogen, or a mixture of these.

5. A method according to any one of claims 1 to 3, wherein the inert gas shielding the electric arc and heat-affected material is argon or an argon mixture, and where the flow rate of the argon or argon mixture is constant or pulsed and above 20 or 25 liters per minute, and wherein the distribution of the inert gas is delivered through a series of gas diffusers.

6. A method according to any one of claims 1 to 5, wherein the required flow rate is greater than 20 I/min.

7. A method according to any one of claims 1 to 6, wherein the maximum oxygen concentration is less than 500ppm oxygen or is less than 100ppm oxygen.

8. A method according to any one of claims 1 to 7, wherein there are less than 25 individual gas diffusers.

9. Production apparatus for a part made of a weldable material by solid freeform fabrication, where there is no enclosure or reactor required, and the part is built in an unrestricted build environment open to the ambient atmosphere by an apparatus which distributes an inert gas flow, the production apparatus including:
a robotic multiple-axis mechanism controlling the position and movement of a welding torch with a wire feeder relative to a stationary support substrate placed upon a fixed support, the welding torch being an electric arc welding process, a tungsten arc welding torch, a gas metal arc welding torch, or a plasma transferred arc welding torch;
a support mechanism controlling the position and movement of the welding torch and the wire feeder relative to the support substrate an actuator controlling the position and movement relative to the support mechanism; and
a control system able to read a computer-generated, three dimensional, direction specific, layered model of the part and employ the computer-generated model to control the position and movement of the robot, and the operation of the welding torch and wire , feeder such that a part is built by welding in a layer-by-layer sequence according to one-dimensional slices of the weldable material onto the substrate structure in agreement with the computer-generated, three dimensional, direction specific, layered model of the part;
**characterized in that** the apparatus also including a localised purging apparatus that is equipped with at least closable gas diffuser outlets and at least five closable gas inlets connected to a tube manifold and an induction heating and closed loop cooling apparatus, wherein the localized purging apparatus comprises a matrix of individual gas diffusers and/or a filter, in the bottom of a gas manifold compartment that is 80 to 180 mm wide and 180 to 400 mm long, or has a cylindrical shape of less than 400 mm in diameter.

10. Apparatus according to claim 9 wherein the localised purging apparatus includes a manifold filled with argon or argon mixture as inert gas and where the gas inlet is equipped with means for regulating the gas flow rate.

11. Apparatus according to claim 9 or claim 10 wherein the induction heating apparatus is electrically attached to the substrate and subsequent weld bead layers.

## Patentansprüche

1. Verfahren zum Herstellen eines Metallteils in einem schweißbaren Material durch trockene Freiformfertigung, das in der Größe unbeschränkt ist und der Umgebungsatmosphäre offen ausgesetzt ist, wobei das Verfahren Folgendes umfasst:
Erzeugen eines computergenerierten dreidimensionalen Modells des Teils, Zerteilen des computergenerierten dreidimensionalen Modells in eine Menge von computergenerierten parallelen scheibenförmigen Schichten und dann Aufteilen jeder Schicht in eine Menge von computergenerierten virtuellen eindimensionalen Stücken und, unter Bezugnahme auf Geometriedaten geschichteter Schweißkügelchen, Ausbilden eines computergenerierten richtungsspezifischen geschichteten Modells des Teils,
Hochladen des richtungsspezifischen geschichteten Modells des Teils in ein Schweißsteuerungssystem, das die Position und Aktivierung eines Lichtbogens in Bezug auf ein Trägersubstrat, der durch einen hochenergetischen Wolfram-Lichtbogenschweißbrenner, einen Plasmalichtbogenschweißbrenner und/oder einen Lichtbogenschutzgasschweißbrenner geliefert wird, und ein System zum Zuführen eines Verbrauchsdrahts steuern kann, das in einem Freifeld-Bearbeitungsraum angeordnet ist, der dem in der Größe unbeschränkten und der Umgebungsatmosphäre offen ausgesetzten Substrat entspricht,
Lenken des Schweißsteuerungssystems, um eine Sequenz eindimensionaler Schweißkügelchen des schweißbaren Materials auf dem Stützträger in einer Struktur abzulagern, die erforderlich ist, um eine erste Schicht des computergenerierten richtungsspezifischen geschichteten Modells des Teils auszubilden,
Ablagern einer zweiten geschweißten Schicht durch Sequenzieren eindimensionaler Schweißkügelchen des schweißbaren Materials auf der zuvor abgelagerten Schicht in einer Konfiguration, die gleich der zweiten Schicht des computergenerierten richtungsspezifischen geschichteten Modells des Teils ist, und
Wiederholen jeder nachfolgenden Schweißkügelchenschicht des computergenerierten richtungsspezifischen geschichteten Modells des Teils, bis das gesamte Teil vollendet ist;
wobei das Verfahren weiterhin Folgendes umfasst:
Verdrängen der Atmosphäre in der unmittelbaren Nähe der Wärmequelle mit einer Inertgasatmosphäre, die eine erforderliche Strömungsrate erzeugt, und wobei diese inerte Atmosphäre eine maximale Sauerstoffkonzentration enthält, wobei das Inertgas von einer lokalisierten Spülvorrichtung durch eine Matrix von individuellen Gasdiffusoren und/oder einem Filter, im Boden eines Gasverteilergehäuses zugeführt wird; und **dadurch gekennzeichnet ist, dass** das Gasverteilergehäuse 80 bis 180 mm breit und 180 bis 400 mm lang ist oder eine zylindrische Form mit einem Durchmesser von weniger als 400 mm aufweist, wobei die Spülvorrichtung mit mindestens verschließbaren Gasdiffusorauslässen und mindestens fünf verschließbaren Gaseinlässen ausgestattet ist, die mit einem Rohrverteiler verbunden sind, und das Verfahren Folgendes umfasst
Zuschalten einer Induktionsheizvorrichtung und einer geregelten Kühlvorrichtung, die einem Schweißsteuerungssystem synergistisch sind, und Vorerhitzen des Substratmaterials, das die abgelagerten Schweißkügelchen umfasst, die dem Typ des schweißbaren Materials entsprechen, wobei Induktionsheiz- und Kühlzyklen ständig oder gepulst von der ersten Schicht zu der abschließenden Schicht angewendet werden, wobei optimale Heiz- und/oder Kühlzyklen des schweißbaren Materials zu der abschließenden erwünschten Teilgestalt und Mikrostruktur in Beziehung stehen.

2. Verfahren nach Anspruch 1, wobei das schweißbare Material ein schweißbares oder ein schweißbares legiertes Eisenmetall oder Nichteisenmetall ist.

3. Verfahren nach Anspruch 2, wobei das schweißbare Material Kohlenstoffstahl oder Kohlenstoff-Mangan-Legierungen, Nickel oder Nickel-Legierungen, Edelstähle, Aluminium oder Aluminiumlegierungen, Titan oder legiertes Titan, Eisenmetall oder Nichteisenmetall oder eine Mischung aus unähnlichen schweißbaren Materialien ist.

4. Verfahren nach einem der Ansprüche 1 bis 3, wobei das Inertgas eines von Argon, Helium, Wasserstoff, Stickstoff oder einer Mischung von diesen ist.

5. Verfahren nach einem der Ansprüche 1 bis 3, wobei das Inertgas, das den Lichtbogen und von Hitze betroffenes Material abschirmt, Argon oder eine Argon-Mischung ist, und wobei die Strömungsrate des Argons oder der Argon-Mischung konstant oder gepulst ist und über 20 oder 25 Liter pro Minute beträgt, und wobei die Verteilung des Inertgases durch eine Serie von Gasdiffusoren geliefert wird.

6. Verfahren nach einem der Ansprüche 1 bis 5, wobei die erforderliche Strömungsrate größer ist als 20 l/min.

7. Verfahren nach einem der Ansprüche 1 bis 6, wobei die maximale Sauerstoffkonzentration kleiner ist als 500 ppm Sauerstoff oder kleiner ist als 100 ppm Sauerstoff.

8. Verfahren nach einem der Ansprüche 1 bis 7, wobei weniger als 25 individuelle Gasdiffusoren vorhanden sind.

9. Erzeugungsvorrichtung für ein Teil, das aus einem schweißbaren Material durch trockene Freiformfertigung angefertigt wird, wobei kein Gehäuse oder Reaktor erforderlich ist und das Teil in einer unbeschränkten Bearbeitungsumgebung, die der Umgebungsatmosphäre offen ausgesetzt ist, durch eine Vorrichtung gebaut wird, die einen Inertgasstrom verteilt, die Erzeugungsvorrichtung Folgendes umfassend:
einen mehrachsigen Robotermechanismus, der die Position und Bewegung eines Schweißbrenners mit einer Drahtvorschubvorrichtung in Bezug auf ein stationäres Trägersubstrat steuert, das auf einem festen Träger angeordnet ist, wobei der Schweißbrenner ein Lichtbogenschweißprozess, ein Wolfram-Lichtbogenschweißbrenner, ein Lichtbogenschutzgasschweißbrenner oder ein Plasmalichtbogenschweißbrenner ist;
einen Trägermechanismus, der die Position und Bewegung des Schweißbrenners und der Drahtvorschubvorrichtung in Bezug auf das Trägersubstrat durch einen Aktuator steuert, der die Position und Bewegung in Bezug auf den Trägermechanismus steuert; und
ein Steuerungssystem, das ein computergeneriertes dreidimensionales richtungsspezifisches geschichtetes Modell des Teils auslesen kann und das computergenerierte Modell einsetzen kann, um die Position und Bewegung des Roboters und den Betrieb des Schweißbrenners und der Drahtvorschubvorrichtung zu steuern, so dass ein Teil durch Schweißen in einer Sequenz Schicht für Schicht gemäß eindimensionalen Schichten des schweißbaren Materials auf der Substratstruktur in Übereinstimmung mit dem computergenerierten dreidimensionalen richtungsspezifischen geschichteten Modell des Teils gebaut wird;
**dadurch gekennzeichnet, dass**
die Vorrichtung auch eine lokalisierte Spülvorrichtung, die mit mindestens verschließbaren Gasdiffusorauslässen und mindestens fünf verschließbaren Gaseinlässen ausgestattet ist, die mit einem Rohrverteiler verbunden sind, und eine Induktionsheizvorrichtung und geregelte Kühlvorrichtung umfasst, wobei die lokalisierte Spülvorrichtung eine Matrix von individuellen Gasdiffusoren und/oder einem Filter, im Boden eines Gasverteilergehäuses umfasst, das 80 bis 180 mm breit und 180 bis 400 mm lang ist oder eine zylindrische Form mit einem Durchmesser von weniger als 400 mm aufweist.

10. Vorrichtung nach Anspruch 9, wobei die punktuelle Spülvorrichtung einen Verteiler umfasst, der mit Argon oder Argon-Mischung als Inertgas gefüllt ist, und wobei der Gaseinlass mit einem Mittel zum Regulieren der Gasstromrate ausgestattet ist.

11. Vorrichtung nach Anspruch 9 oder 10 wobei die Induktionsheizvorrichtung elektrisch an dem Substrat und den nachfolgenden Schweißkügelchenschichten befestigt ist.

## Revendications

1. Procédé de fabrication d'une pièce métallique dans un matériau soudable par fabrication de forme libre solide non limitée en taille et ouverte sur l'atmosphère ambiante, le procédé comprenant :
la génération d'un modèle tridimensionnel généré par ordinateur de la pièce, le tranchage du modèle tridimensionnel généré par ordinateur en un ensemble de couches tranchées parallèles générées par ordinateur puis la division de chaque couche en un ensemble de morceaux unidimensionnels virtuels générés par ordinateur et, sur la base de données géométriques de cordons de soudure disposés en couches, la formation d'un modèle stratifié spécifique de la direction généré par ordinateur de la pièce,
le chargement du modèle stratifié spécifique de la direction de la pièce dans un système de contrôle de soudage pouvant contrôler la position et l'activation, par rapport à un substrat de support, d'un arc électrique délivré par un chalumeau de soudage à l'arc avec électrode de tungstène de forte énergie, un chalumeau de soudage à l'arc transféré par plasma, et/ou un chalumeau de soudage à l'arc sous protection gazeuse avec électrode fusible, et d'un système destiné à faire avancer un fil consommable, placé dans un espace de construction en zone ouverte adapté au substrat non limité en taille et ouvert sur l'atmosphère ambiante,
le pilotage du système de contrôle de soudage pour déposer une séquence de cordons de soudure unidimensionnels du matériau soudable sur le substrat de support en un motif nécessaire pour former une première couche du modèle stratifié spécifique de la direction généré par ordinateur de la pièce,
le dépôt d'une deuxième couche soudée par séquençage de cordons de soudure unidimensionnels du matériau soudable sur la couche déposée précédente dans une configuration identique à celle de la deuxième couche du modèle stratifié spécifique de la direction généré par ordinateur de la pièce, et
la répétition de chaque couche de cordons de soudure successive du modèle stratifié spécifique de la direction généré par ordinateur de la pièce jusqu'à ce que la pièce entière soit achevée ;
le procédé comportant en outre :
le remplacement de l'atmosphère à proximité immédiate de la source de chaleur par une atmosphère de gaz inerte qui produit un débit nécessaire, et dans lequel cette atmosphère inerte contient une concentration maximale d'oxygène, dans lequel le gaz inerte est délivré par un appareil de purge localisé par le biais d'une matrice de diffuseurs de gaz individuels et/ou d'un filtre, dans le fond d'un compartiment de collecteur de gaz ; et est **caractérisé en ce que** le compartiment de collecteur de gaz fait 80 à 180 mm de large et 180 à 400 mm de long, ou a une forme cylindrique de moins de 400 mm de diamètre, dans lequel l'appareil de purge est équipé d'au moins des sorties de diffuseurs de gaz obturables et d'au moins cinq entrées de gaz obturables reliées à un collecteur tubulaire et le procédé comporte
l'activation d'un appareil de chauffage par induction et de refroidissement en boucle fermée synergique d'un système de contrôle de soudage et le préchauffage du matériau substrat comportant les cordons de soudure déposés, adapté au type de matériau soudable, dans lequel les cycles de chauffage par induction et de refroidissement sont appliqués de façon constante ou pulsée de la première couche à la couche finale, les cycles de chauffage et/ou de refroidissement optimaux du matériau soudable se rapportant à la forme et la microstructure de la pièce finale souhaitée.

2. Procédé selon la revendication 1, dans lequel le matériau soudable est un métal soudable, ou un métal allié soudable, de nature ferreuse ou non ferreuse.

3. Procédé selon la revendication 2, dans lequel le matériau soudable est un acier au carbone ou un alliage carbone-manganèse, du nickel ou un alliage de nickel, de l'acier inoxydable, de l'aluminium ou un alliage d'aluminium, du titane ou du titane allié, un matériau ferreux ou non ferreux, ou un mélange de matériaux soudables différents.

4. Procédé selon l'une quelconque des revendications 1 à 3, dans lequel le gaz inerte en est un parmi l'argon, l'hélium, l'hydrogène, l'azote, ou un mélange de ceux-ci.

5. Procédé selon l'une quelconque des revendications 1 à 3, dans lequel la protection gazeuse inerte de l'arc électrique et du matériau affecté par la chaleur est l'argon ou un mélange d'argon, et dans lequel le débit de l'argon ou du mélange d'argon est constant ou pulsé et supérieur à 20 ou 25 litres par minute, et dans lequel la distribution du gaz inerte est délivrée par le biais d'une série de diffuseurs de gaz.

6. Procédé selon l'une quelconque des revendications 1 à 5, dans lequel le débit nécessaire est supérieur à 20 l/min.

7. Procédé selon l'une quelconque des revendications 1 à 6, dans lequel la concentration maximale d'oxygène est inférieure à 500 ppm d'oxygène ou est inférieure à 100 ppm d'oxygène.

8. Procédé selon l'une quelconque des revendications 1 à 7, dans lequel on dénombre moins de 25 diffuseurs de gaz individuels.

9. Appareil de production pour une pièce constituée d'un matériau soudable par fabrication de forme libre solide, où aucune enceinte ni aucun réacteur n'est nécessaire, et la pièce est construite dans un environnement de construction non limité ouvert sur l'atmosphère ambiante par un appareil qui distribue un flux de gaz inerte, l'appareil de production comportant :
un mécanisme robotique multiaxe contrôlant la position et le déplacement d'un chalumeau de soudage avec un dispositif d'avance de fil par rapport à un substrat de support stationnaire placé sur un support fixe, le chalumeau de soudage étant un processus de soudage à l'arc électrique, un chalumeau de soudage à l'arc avec électrode de tungstène, un chalumeau de soudage à l'arc sous protection gazeuse avec électrode fusible, ou un chalumeau de soudage à l'arc transféré par plasma ;
un mécanisme de support contrôlant la position et le déplacement du chalumeau de soudage et du dispositif d'avance de fil par rapport au substrat de support, un actionneur contrôlant la position et le déplacement par rapport au mécanisme de support ; et
un système de contrôle pouvant lire un modèle tridimensionnel stratifié spécifique de la direction généré par ordinateur de la pièce et employer le modèle généré par ordinateur pour contrôler la position et le déplacement du robot, et le fonctionnement du chalumeau de soudage et du dispositif d'avance de fil de telle sorte qu'une pièce est construite par soudage dans une séquence couche par couche en fonction de tranches unidimensionnelles du matériau soudable sur la structure de support en accord avec le modèle tridimensionnel stratifié spécifique de la direction généré par ordinateur de la pièce ;
**caractérisé en ce que**
l'appareil comporte également un appareil de purge localisée équipé d'au moins des sorties de diffuseurs de gaz obturables et d'au moins cinq entrées de gaz obturables reliées à un collecteur tubulaire et un appareil de chauffage par induction et de refroidissement en boucle fermée, dans lequel l'appareil de purge localisée comprend une matrice de diffuseurs de gaz individuels et/ou d'un filtre, dans le fond d'un compartiment de collecteur de gaz qui fait 80 à 180 mm de large et 180 à 400 mm de long, ou a une forme cylindrique de moins de 400 mm de diamètre.

10. Appareil selon la revendication 9 dans lequel l'appareil de purge localisée comporte un distributeur rempli avec de l'argon ou un mélange d'argon comme gaz inerte et dans lequel l'entrée de gaz est équipée de moyens pour réguler le débit de gaz.

11. Appareil selon la revendication 9 ou la revendication 10 dans lequel l'appareil de chauffage par induction est attaché électriquement au substrat et aux couches de cordons de soudure consécutives.
